# FASCICULE DE BREVET EUROPEEN

(11) **EP 0 641 489 B1**
(45) Date de publication et mention de la délivrance du brevet: **13.08.1997**
(21) Numéro de dépôt: 93910132.5
(22) Date de dépôt: 18.05.1993
(51) Int. Cl.: H01M 6/18

(54) **ELECTROLYTE SOLIDE ET PROCEDE DE FABRICATION D'UN GENERATEUR EN COUCHES MINCES COMPORTANT UN TEL ELECTROLYTE SOLIDE**
FESTER ELEKTROLYT UND VERFAHREN ZUR HERSTELLUNG EINES GENERATORS IN DÜNNEN SCHICHTEN MIT EINEM SOLCHEN ELEKTROLYTEN
SOLID ELECTROLYTE AND METHOD FOR FABRICATING A GENERATOR IN THIN LAYERS COMPRISING SUCH SOLID ELECTROLYTE

(30) Priorité: 20.05.1992 FR 9206129
(43) Date de publication de la demande: 08.03.1995
(73) Titulaire: COMMISSARIAT A L'ENERGIE ATOMIQUE, 75015 Paris Cédex 15 (FR)
(72) Inventeur: LONGCHAMPT, Georges 23, rue des Abeilles, F-38240 Meylan (FR)
(74) Mandataire: Des Termes, Monique
(86) Numéro de dépôt international: FR9300480
(87) Numéro de publication internationale: WO9323886

(56) Documents cités:
- EP-A- 0 492 858
- SOLID STATE IONICS vol. 7, no. 1, Août 1982, AMSTERDAM NL pages 75 - 79 J. E. WESTON ET AL 'Effects of Inert Fillers on the Mechanical and Elctrochrochemical Properties of Lithium Salt-Poly(Ethylene oxide) Polymer Electrolytes'
- JOURNAL OF THE ELECTROCHEMICAL SOCIETY PRINCETON, NJ EXTENDED ABSTRACTS, FALL
- MEETING, SEATTLE WASHINGTON, ABS NO. 27 page 43 P. BISOGNI ET AL 'Electrochemical Characterization of a PEO Based-LiClO4/y-LiClO2 Ceramic/ Polymeric Composite Electrolyte'

## Description

La présente invention a pour objet un électrolyte solide utilisable dans un générateur électrochimique.

De façon plus précise, elle concerne la fabrication de générateurs électrochimiques en couches minces dont le principe de fonctionnement est basé sur l'insertion et la désinsertion (ou intercalation-désintercalation) d'un ion en particulier de métal alcalin tel que le lithium.

Dans ces générateurs électrochimiques, la réaction électrochimique à l'origine de la production de courant met en jeu le transfert, par l'intermédiaire d'un électrolyte conducteur ionique, de cations provenant d'une électrode négative, qui viennent s'intercaler dans le réseau accepteur de l'électrode positive.

Des générateurs électrochimiques de ce type sont par exemple décrits dans les documents FR-A- 2 442 513, FR-A- 2 442 514 et FR-A- 2 442 512. Ces générateurs comprennent une électrode positive et une électrode négative par exemple en lithium, séparées par un électrolyte constitué par exemple par une solution solide d'un composé ionique tel que le trifluorométhane sulfonate de lithium, au sein d'un matériau macromoléculaire tel que le poly(oxyde d'éthylène). Dans ce cas, l'électrode positive peut être constituée par exemple de sulfure de titane, de poudre de noir de carbone et de l'électrolyte décrit ci-dessus.

Pour réaliser de tels générateurs en couches minces, la pratique habituelle consiste à préparer séparément les couches minces formant respectivement l'électrode positive et l'électrolyte, en déposant chaque couche à partir d'une solution appropriée sur un film polymère, par exemple sur une plaque de polytétrafluoréthylène faisant office de support et assurant par ailleurs la protection de la couche pour la durée du stockage éventuel.

Pour préparer le générateur, on met en contact les couches par pressage ou colaminage à chaud, par exemple à une température de 150°C, comme il est décrit dans les documents FR-A- 2 442 512, 2 442 513 et 2 442 514, les films de polymère étant ultérieurement enlevés.

Ce type de technologie, outre qu'elle peut sembler peu économique du fait des grandes longueurs de films de support polymère non réutilisables qu'elle nécessite, est surtout à l'origine de défauts d'assemblages nuisibles au fonctionnement correct du générateur électrochimique.

En effet, les techniques de pressage à chaud ne permettent pas l'obtention d'une qualité de contact suffisante entre les couches, par exemple en raison de la présence de bulles ou d'autres défauts à l'interface.

Par ailleurs, au cours du fonctionnement d'un accumulateur dont l'électrolyte a été mis en oeuvre sans précaution, le matériau macromoléculaire de l'électrolyte est amené à travailler au-dessus de son point de transition vitreuse, ce qui risque d'entraîner des courts-circuits suivis d'échauffement et de problèmes de sécurité en cas de fluage.

Aussi, des recherches ont été entreprises pour surmonter ces difficultés en éliminant l'étape de pressage à chaud des couches minces constituant l'électrode positive et l'électrolyte, ainsi qu'en ajoutant dans l'électrolyte des constituants permettant la diminution du risque de courts-circuits en cas de fluage.

La présente invention a précisément pour objet un électrolyte solide qui peut être réalisé sous la forme d'une couche mince déposée directement sur l'électrode positive d'un générateur électrochimique sans détériorer cette électrode.

Selon l'invention, l'électrolyte solide comprend un composé ionique dispersé dans un matériau macromoléculaire et il se caractérise en ce qu'il comprend en outre un composé inorganique choisi parmi MgO, BeO, La₂O₃ et leurs mélanges, la présence simultanée de silice étant exclue lorsque le composé inorganique est MgO.

Selon l'invention, on peut déposer directement sur l'électrode positive d'un générateur une couche mince de cet électrolyte par enduction à partir d'une solution. En effet, la présence du composé inorganique choisi parmi MgO, BeO, La₂O₃ et leurs mélanges, c'est-à-dire d'un matériau non-conducteur électronique stable vis-à-vis des constituants des électrodes du générateur ainsi que des autres constituants de l'électrolyte, permet d'éviter une dissolution partielle de l'électrode positive par la solution d'enduction.

Grâce à ce mode de dépôt de la couche d'électrolyte et à la présence dans ce dernier d'un composé inorganique, inerte et non conducteur, assurant sa tenue, il est possible d'obtenir un contact intime entre les différentes couches du générateur et de limiter les risques de courts-circuits par détrempe de la cathode par l'électrolyte au cours de l'enduction ou par fluage de l'électrolyte au cours du fonctionnement de l'accumulateur.

On peut ainsi simplifier et rendre plus économique le processus de fabrication des générateurs en couches minces, en utilisant simplement un additif peu onéreux et disponible dans le commerce tel que MgO.

Pour que le composé inorganique puisse remplir son rôle, c'est-à-dire éviter la détrempe de l'électrode positive par la solution d'enduction et les risques de courts-circuits, il est nécessaire que celui-ci soit présent en quantité suffisante dans l'électrolyte solide.

Généralement, pour obtenir ce résultat, on utilise une quantité de composé inorganique telle qu'elle représente de 3 à 35% en volume du volume total de l'électrolyte.

Avantageusement, le composé inorganique utilisé est MgO. Dans ce cas, l'électrolyte solide comprend avantageusement de 8 à 12% en volume de MgO.

Dans l'électrolyte solide de l'invention, le matériau macromoléculaire peut être l'un des matériaux macromolélculaires généralement utilisés dans ce type d'électrolyte solide, par exemple les homopolymères ou copolymères décrits dans les documents FR-A- 2 442 512, FR-A- 2 523 769 et FR-A- 2 523 770, qui comportent des atomes d'oxygène ou d'autres hétéroatomes.

Ces matériaux macromoléculaires sont par exemple des homo et/ou copolymères dérivés de motifs monomères représentés :
- soit par la formule suivante : 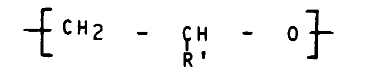 dans laquelle R' représente un atome d'hydrogène ou l'un des groupes Ra, -CH₂ -O-Ra, -CH₂-O-Re-Ra, -CH₂-N=(CH₃)₂, avec Ra représentant un radical alkyle ou cycloalkyle comportant notamment 1 à 16, de préférence 1 à 4 atomes de carbone, Re représentant un radical polyéther de formule générale -(CH₂-CH₂-O)ₚ-, p ayant une valeur de 1 à 100, notamment de 1 à 2,
- soit par la formule suivante : 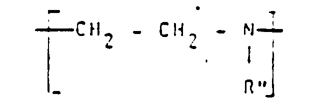 dans laquelle R" représente Ra, -Re-Ra, avec Ra et Re ayant respectivement l'une des significations susindiquées,
- soit par la formule suivante : 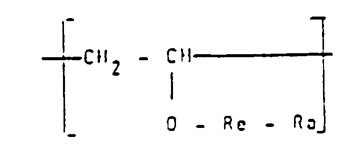 dans laquelle Ra et Re ont respectivement l'une des significations susindiquées,
- soit par la formule : 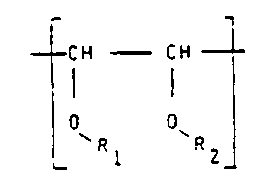 dans laquelle R₁ et R₂ sont identiques ou différents et représentent chacun l'un des groupes Re, Re-Ra avec les significations ci-dessus, Re pouvant alors représenter aussi un poly-éther de formule :

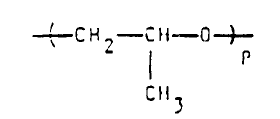

Dans l'invention, on peut aussi utiliser comme matériau macromoléculaire des polymères organométalliques dans lesquels chaque atome de métal est relié par un atome d'oxygène à au moins deux chaînes polymériques dérivées chacune d'un ou plusieurs monomères comportant chacun au moins un hétéroatome apte à former des liaisons du type donneur accepteur avec le cation du composé ionique, comme il est décrit dans FR-A- 2 557 735.

Avantageusement dans l'invention, on utilise comme matériau macromoléculaire, le poly(oxyde d'éthylène).

Le composé ionique utilisé dans l'électrolyte de l'invention peut être choisi parmi de nombreux composés ioniques tels que les sels de formule M⁺X⁻ dans lesquels M⁺ représente au moins un cation, en particulier un cation de métal alcalin tel que le lithium, le sodium ou le potassium ou encore l'ion ammonium NH₄⁺.

L'anion X⁻ du sel peut être par exemple I⁻, SCN⁻, CLO₄⁻, BF₄⁻, PF₆⁻, AsF₆⁻, CF₃CO₂⁻ et CF₃SO₃⁻.

A titre d'exemple de composés ioniques utilisables dans l'invention, on peut citer en particulier les sels de lithium tels que le perchlorate de lithium LiClO₄.

Dans l'invention, on peut aussi utiliser des composés ioniques issus d'autres combinaisons d'anions et de cations, par exemple les sels décrits dans FR-A- 2 606 218 répondant aux formules suivantes : 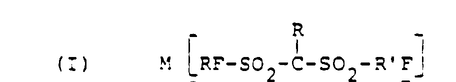 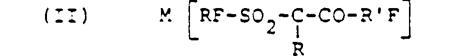 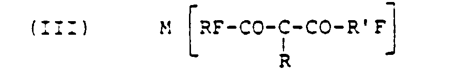 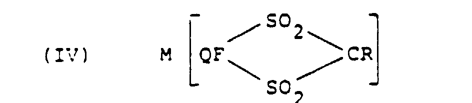 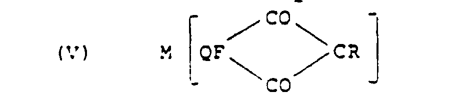 formules dans lesquelles
- M est un métal alcalin, alcalino-terreux, un métal de transition ou une terre rare,
- RF et R'F qui sont identiques ou différents représentent chacun un radical perhalogéné, de préférence perfluoré, ayant de 1 à 12 atomes de carbone,
- R est un hydrogène ou un radical alkyle ayant de 1 à 30 atomes de carbone,
- QF est un radical divalent perfluoré ayant de 2 à 6 atomes de carbone.

Dans l'électrolyte de l'invention, les quantités de matériau macromoléculaire et de composé ionique sont de préférence telles que le rapport entre le nombre de cations du composé ionique et le nombre d'oxygènes ou d'hétéroatomes du matériau macromoléculaire soit dans la gamme allant de 1 à 40.

Comme on l'a vu plus haut, l'électrolyte solide de l'invention est particulièrement utilisé dans des générateurs électrochimiques en couches minces car il permet de former la couche mince d'électrolyte directement sur l'électrode par la technique d'enduction.

Aussi, l'invention a également pour objet une composition utilisable pour la préparation d'une couche mince de l'électrolyte solide décrit ci-dessus, ainsi qu'un procédé de fabrication d'un générateur électrochimique à couches minces utilisant la technique d'enduction.

Selon l'invention, la composition utilisable pour la préparation de l'électrolyte solide en couche mince, est constituée par une solution dans un solvant du matériau macromoléculaire et du composé ionique,contenant en suspension le composé inorganique choisi parmi MgO, BeO, La₂O₃ et leurs mélanges, le solvant représentant 80 à 90% du volume total de la composition.

Les solvants utilisés dans cette composition peuvent être des solvants organiques tels que ceux servant à la préparation d'électrolytes en couche mince sur des supports en polymère, par exemple de l'acétonitrile, du méthanol, du chlorure de méthylène ou leurs mélanges.

Dans cette composition, la teneur en composé inorganique est choisie en fonction des quantités de matériau macromoléculaire et de composé ionique utilisées de façon telle que le composé inorganique représente de 3 à 35% en volume du volume total des constituants de l'électrolyte solide, c'est-à-dire du volume formé par le matériau macromoléculaire, le composé ionique et le composé inorganique.

Les teneurs en matériau macromoléculaire et en composé ionique sont choisies de façon que l'on ait au moins une mole du composé ionique par kilogramme de matériau macromoléculaire et la teneur en composé ionique ne dépasse pas celle correspondant à la limite de solubilité du composé ionique dans le matériau macromoléculaire utilisé.

A titre d'exemple, lorsque le matériau macromoléculaire est du poly(oxyde d'éthylène), le composé ionique est du perchlorate de lithium et le composé inorganique est MgO, on peut utiliser
- de 18,84 à 12,67cm³ de polyoxyde d'éthylène,
- de 2,10 à 1,41cm³ de perchlorate de lithium, pour un litre de solvant constitué par du méthanol, et
- de 0,64 à 7,5cm³ de MgO en poudre qui restera en suspension.

Cette composition peut être utilisée pour la fabrication d'un générateur électrochimique en couches minces comprenant une couche mince de cet électrolyte solide associé à une électrode positive en couche mince.

Le procédé de fabrication d'un tel générateur comprend les étapes suivantes :
a) déposer sur cette électrode positive en couche mince, une couche mince d'épaisseur calibrée d'une pâte semi-liquide constituée par une solution du matériau macromoléculaire et du composé ionique dans un solvant organique contenant en suspension le composé inorganique, et
b) sécher la couche ainsi déposée pour obtenir une couche mince d'électrolyte solide.

Après séchage de la couche d'électrolyte solide, on peut appliquer sur celle-ci une électrode négative en couche mince, par exemple une feuille de lithium.

Dans un tel générateur électrochimique, l'électrode positive peut être préparée par des méthodes classiques.

A titre d'exemple, l'électrode positive peut être constituée par un mélange d'un polymère macromoléculaire et d'un matériau conducteur électronique tel que le graphite, le carbone amorphe, les métaux en poudre et leurs mélanges, ou par un mélange d'un composé actif d'insertion tel que ceux décrits dans FR-A- 2 376 077, avec un polymère.

On peut aussi utiliser pour la réalisation de l'électrode positive un mélange formé d'un composé actif d'insertion, par exemple de bioxyde de manganèse, d'une matrice conductrice ionique polymère, par exemple le poly(oxyde d'éthylène), de carbone dont le rôle est d'assurer la conductibilité électronique, et d'un sel conducteur tel que le perchlorate de lithium.

Le procédé de l'invention est très avantageux car il permet un contrôle précis de l'épaisseur de la couche d'électrolyte déposée. Par ailleurs, il est compatible avec une mise en oeuvre industrielle car les opérations de dépôt et de séchage rapide effectué par exemple par infrarouge ou par air sec, peuvent être réalisées en continu sur une ligne de production.

De plus, pour l'enduction, il est facile de vérifier la masse de dépôt humide et sec et de contrôler ainsi en continu le processus de fabrication.

Ainsi, cette technologie de fabrication garantit un contact intime entre les couches ainsi que la maitrise de l'épaisseur de la couche d'électrolyte et donc une bonne reproductibilité des performances des générateurs.

D'autres caractéristiques et avantages de l'invention apparaîtront mieux à la lecture de la description qui suit d'un exemple de réalisation donné à titre illustratif et non limitatif.

Cet exemple concerne la fabrication d'un générateur électrochimique en couches minces utilisant un électrolyte solide conforme à l'invention.

Pour la fabrication de ce générateur, on réalise une couche mince de l'électrolyte solide sur une plaque en nickel qui constituera l'un des collecteurs de courant du générateur, recouverte d'une couche mince de l'électrode positive qui est constituée par exemple d'un mélange de bioxyde de manganèse, de poly(oxyde d'éthylène), de carbone et de perchlorate de lithium.

L'électrolyte solide est constitué de polyoxyde d'éthylène, de perchlorate de lithium et de magnésie.

Pour réaliser la couche d'électrolyte solide, on prépare tout d'abord une composition semi-liquide en opérant de la façon suivante.

On disperse dans 0,2l de méthanol 8g de magnésie en poudre pour obtenir en fin d'opération une quantité de magnésie représentant environ 10% en volume du volume total correspondant à l'extrait sec de la composition.

On soumet ensuite le mélange de magnésie et de méthanol à une agitation violente pendant 10min, et on préserve la suspension dans une éprouvette.

Dans un autre récipient contenant 0,3l de méthanol, on introduit 21g de poly(oxyde d'éthylène) et 4,41g de perchlorate de lithium, puis on malaxe jusqu'à ce que le mélange devienne visqueux et translucide. On ajoute alors la suspension de magnésie et on place l'ensemble sous agitation dans un bain-marie à une température de 65°C environ afin d'évaporer le solvant et de réduire le volume de la solution à 0,2l, ce qui correspond à un volume d'extrait sec dans la composition de 10% environ (20% en poids environ).

La composition obtenue est ensuite aspirée sous vide dans une fiole par l'intermédiaire d'une crépine et elle peut être conservée à environ 40°C en attendant d'être déposée sur l'électrode positive.

On procède ensuite au dépôt de la couche mince d'électrolyte en déposant la pâte semi-liquide sur l'électrode positive en couche mince et en réduisant ensuite l'épaisseur de la couche de pâte à la valeur voulue (500µm par exemple) par un rouleau d'acier inoxydable qui se déplace sur des cales d'épaisseur sur toute la surface de la couche au moyen d'un dispositif d'entraînement motorisé. On soumet ensuite l'ensemble à un séchage sous air sec, puis à un dégazage en étuve sous vide afin d'éliminer toute trace d'eau résiduelle.

Après étuvage, on introduit le sandwich formé par le collecteur de courant, l'électrode positive et l'électrolyte dans une chambre sèche sous balayage de gaz inerte, puis on l'assemble avec une anode de lithium préalablement découpée aux dimensions adéquates munie d'un collecteur de courant. Cet assemblage est réalisé par compression calibrée.

La différence de potentiel aux bornes de l'accumulateur ainsi fabriqué est voisine de 3V à température ambiante.

On introduit le générateur dans un boîtier étanche muni de deux sorties de courant en vue de son utilisation.

De tels générateurs peuvent être utilisés comme piles ou accumulateurs pour la traction électrique en général (automobiles, bus, véhicules utilitaires, chariots élévateurs), pour des applications stationnaires (sauvegarde d'onduleurs, de centraux téléphoniques, d'aéroports etc.) et pour des applications dans des systèmes portables, par exemple dans des outillages portables, en téléphonie etc.

## Revendications

1. Electrolyte solide utilisable dans un générateur électrochimique comprenant un composé ionique dispersé dans un matériau macromoléculaire, caractérisé en ce qu'il comprend en outre un composé inorganique choisi parmi MgO, BeO, La₂O₃ et leurs mélanges, la présence simultanée de silice étant exclue lorsque le composé inorganique est MgO.

2. Electrolyte selon la revendication 1, caractérisé en ce que le composé inorganique représente de 3 à 35% en volume du volume total de l'électrolyte.

3. Electrolyte selon l'une quelconque des revendications 1 et 2, caractérisé en ce que le composé inorganique est MgO.

4. Electrolyte selon la revendication 3, caractérisé en ce qu'il comprend de 8 à 12% en volume de MgO.

5. Electrolyte selon l'une quelconque des revendications 1 à 4, caractérisé en ce que le matériau macromoléculaire est choisi parmi les polymères ou copolymères comportant des atomes d'oxygène ou d'autres hétéroatomes.

6. Electrolyte selon l'une quelconque des revendications 1 à 5, caractérisé en ce que le composé ionique est un sel de lithium.

7. Composition utilisable pour la préparation d'un électrolyte solide selon l'une quelconque des revendications 1 à 6, caractérisée en ce qu'elle est constituée par une solution dans un solvant du matériau macromoléculaire et du composé ionique, contenant en suspension le composé inorganique choisi parmi MgO, BeO, La₂O₃ et leurs mélanges, le solvant représentant 80 à 90% du volume total de la composition.

8. Composition selon la revendication 7, caractérisée en ce que le matériau macromoléculaire est du polyoxyde d'éthylène, le composé ionique est du perchlorate de lithium et le composé inorganique est MgO, et en ce qu'elle comprend
- 18,84 à 12,67cm³ de polyoxyde d'éthylène,
- 2,10 à 1,41cm³ de perchlorate de lithium,
- 0,64 à 7,5cm³ de MgO, pour 1l de solvant constitué par du méthanol.

9. Procédé de fabrication d'un générateur électrochimique en couches minces comprenant une couche mince d'un électrolyte solide selon l'une quelconque des revendications 1 à 6, associée à une électrode positive en couche mince, caractérisé en ce qu'il comprend les étapes suivantes :
a) déposer sur cette électrode positive en couche mince, une couche mince d'épaisseur calibrée d'une pâte semi-liquide constituée par une solution du matériau macromoléculaire et du composé ionique dans un solvant organique, contenant en suspension le composé inorganique,
b) sécher la couche ainsi déposée pour obtenir une couche mince d'électrolyte solide.

10. Procédé selon la revendication 9, caractérisé en ce que l'on applique ensuite sur la couche mince d'électrolyte solide une électrode négative en couche mince.

11. Procédé selon l'une quelconque des revendications 9 et 10, caractérisé en ce que la pâte semi-liquide comprend 80 à 90% en volume de solvant.

## Claims

1. Solid electrolyte usable in an electrochemical generator incorporating an ionic compound dispersed in a macromolecular material, characterized in that it also comprises an inorganic compound chosen from among MgO, BeO, La₂O₃, and mixtures thereof, the simultaneous presence of silica being excluded when the inorganic compound is MgO.

2. Electrolyte according to claim 1, characterized in that the inorganic compound represents 3 to 35 vol.% of the total volume of the electrolyte.

3. Electrolyte according to either of the claims 1 and 2, characterized in that the inorganic compound is MgO.

4. Electrolyte according to claim 3, characterized in that it comprises 8 to 12 vol.% MgO.

5. Electrolyte according to any one of the claims 1 to 4, characterized in that the macromolecular material is chosen from among polymers or copolymers having oxygen atoms or other heteroatoms.

6. Electrolyte according to any one of the claims 1 to 5, characterized in that the ionic compound is a lithium salt.

7. Composition usable for the preparation of a solid electrolyte according to any one of the claims 1 to 6, characterized in that it is constituted by a solution in a solvent of the macromolecular material and the ionic compound, containing in suspension the inorganic compound chosen from MgO, BeO, La₂O₃ and mixtures thereof, the solvent representing 80 to 90% of the total volume of the composition.

8. Composition according to claim 7, characterized in that the macromolecular material is poly(ethylene oxide), the ionic compound is lithium perchlorate and the inorganic compound is MgO and in that it comprises 18.84 to 12.67 cm³ of poly(ethylene oxide), 2.10 to 1.41 cm³ lithium perchlorate and 0.64 to 7.5 cm³ MgO for 1 litre of solvent constituted by methanol.

9. Process for the production of a thin film electrochemical generator incorporating a thin film solid electrolyte according to any one of the claims 1 to 6, associated with a thin film positive electrode, characterized in that it comprises the following stages :
a) depositing on said thin film positive electrode a thin film of calibrated thickness of semiliquid paste constituted by a solution of the macromolecular material and the ionic compound in anorganic solvent, containing in suspension the inorganic compound and
b) drying the thus deposited film in order to obtain a thin solid electrolyte film.

10. Process according to claim 9, characterized in that a thin film negative electrode is then applied to the thin film solid electrolyte.

11. Process according to either of the claims 9 and 10, characterized in that the semiliquid paste comprises 80 to 90 vol.% solvent.

## Patentansprüche

1. Fester Elektrolyt für einen elektrochemischen Generator, eine in einem makromolekularen Material dispergierte ionische Verbindung umfassend,
**dadurch gekennzeichnet,**
daß er außerdem eine anorganische Verbindung umfaßt, ausgewählt unter MgO, BeO, La₂O₃ und ihren Mischungen, wobei das gleichzeitige Vorhandensein von Siliciumdioxid ausgeschlossen ist, wenn die anorganische Verbindung MgO ist.

2. Elektrolyt nach Anspruch 1, dadurch gekennzeichnet, das die anorganische Verbindung 3 bis 35% des Gesamtvolumens darstellt.

3. Elektrolyt nach einem der Ansprüche 1 und 2, dadurch gekennzeichnet, daß die anorganische Verbindung MgO ist.

4. Elektrolyt nach Anspruch 3, dadurch gekennzeichnet, daß er 8 bis 12 Volumenprozent MgO enthält.

5. Elektrolyt nach einem der Ansprüche 1 bis 4, dadurch gekennzeichnet, daß das makromolekulare Material ausgewählt wird unter den Polymeren und den Copolymeren, die Sauerstoffatome oder andere Heteroatome enthalten.

6. Elektrolyt nach einem der Ansprüche 1 bis 5, dadurch gekennzeichnet, daß die ionische Verbindung ein Lithiumsalz ist.

7. Zusammensetzung zur Herstellung eines festen Elektrolyten nach einem der Ansprüche 1 bis 6, dadurch gekennzeichnet, daß sie gebildet wird durch eine Lösung des makromolekularen Materials und der ionischen Verbindung in einem Lösungsmittel, wobei die unter MgO, BeO, La₂O₃ und ihren Mischungen ausgewählte anorganische Verbindung in Suspension gehalten wird und das Lösungsmittel 80 bis 90% des Gesamtvolumen der Zusammensetzung darstellt.

8. Zusammensetzung nach Anspruch 7, dadurch gekennzeichnet, daß das makromolekulare Material Ethylenpolyoxid ist, die ionische Verbindung Lithiumperchlorat ist und die anorganische Verbindung MgO ist, und dadurch, daß sie umfaßt:
- 18,84 bis 12,67cm³ Ethylenpolyoxid,
- 2,10 bis 1,41cm³ Lithiumperchlorat,
- 0,64 bis 7,5cm³ MgO pro 11 Lösungsmittel, gebildet durch Methanol.

9. Verfahren zur Herstellung eines elektrochemischen Dünnschichten-Generators, eine dünne Schicht aus einem festen Elektrolyten nach einem der Ansprüche 1 bis 6 umfassend, verbunden mit einer positiven Dünnschichtelektrode,
**dadurch gekennzeichnet,**
daß es die folgenden Schritte umfaßt:
a) Abscheiden - auf dieser positiven Dünnschichtelektrode - einer dünnen Schicht von kalibrierter Dicke aus einer halbflüssigen Paste, gebildet durch eine Lösung des makromolekularen Materials und der ionischen Verbindung in einem organischen Lösungsmittel, das die anorganische Verbindung in Suspension hält bzw. enthält,
b) Trocknen der so abgeschiedenen Schicht, um eine dünne Schicht aus festem Elektrolyt herzustellen.

10. Verfahren nach Anspruch 9, dadurch gekennzeichnet, daß man anschließend auf die dünne Schicht aus festem Elektrolyt eine negative Dünnschichtelektrode aufbringt.

11. Verfahren nach einem der Ansprüche 9 und 10, dadurch gekennzeichnet, das die halbflüssige Paste 80 bis 90 Volumenprozent Lösungsmittel enthält.
